(19) Europäisches Patentamt
European Patent Office
Office européen des brevets

(11) **EP 3 926 519 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **20180806.0**

(22) Anmeldetag: **18.06.2020**

(51) Internationale Patentklassifikation (IPC):
***G06K 7/14*** *(2006.01)*

(52) Gemeinsame Patentklassifikation (CPC):
**G06K 7/1482**

(54) **OPTISCHER SENSOR UND VERFAHREN ZUR ERFASSUNG VON CODES**

OPTICAL SENSOR AND METHOD FOR DETECTING CODES

CAPTEUR OPTIQUE ET PROCÉDÉ DE DÉTECTION DE CODES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.12.2021 Patentblatt 2021/51**

(73) Patentinhaber: **Leuze electronic GmbH + Co. KG 73277 Owen/Teck (DE)**

(72) Erfinder:
- **STRUCKMEIER, Anselm 73277 Owen (DE)**
- **SANZI, Dr., Friedrich 73230 Kirchheim/Teck (DE)**

(74) Vertreter: **Ruckh, Rainer Gerhard Patentanwaltskanzlei Ruckh Jurastraße 1 73087 Bad Boll (DE)**

(56) Entgegenhaltungen:
EP-A1- 3 428 834      DE-A1- 10 137 093
US-A1- 2019 325 183

- **P. S. K. ROHIT VARMA ET AL: "Edge Detection through Artificial Neural Networks", IOSR JOURNAL OF VLSI AND SIGNAL PROCESSING, Bd. 4, Nr. 2, 1. Januar 2014 (2014-01-01), Seiten 22-25, XP055727638, ISSN: 2319-4197, DOI: 10.9790/4200-04242225**
- **MOHAMED A. EL-SAYED ET AL: "Automated Edge Detection Using Convolutional Neural Network", INTERNATIONAL JOURNAL OF ADVANCED COMPUTER SCIENCE AND APPLICATIONS, Bd. 4, Nr. 10, 1. Januar 2013 (2013-01-01) , Seiten 11-17, XP055506215,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen optischen Sensor und ein Verfahren zur Erfassung von Codes.

Derartige als Codeleser ausgebildete optische Sensoren dienen insbesondere zur Detektion von Barcodes. Die optischen Sensoren sind typischerweise als Scanner oder kamerabasierte Sensoren ausgebildet. Bei einem optischen Sensor in Form eines Scanners werden von einem Sender emittierte Lichtstrahlen mittels einer Ablenkeinheit periodisch innerhalb eines Erfassungsbereichs abgelenkt und dabei über einen zu detektierenden Barcode geführt. Die dadurch am Empfänger des optischen Sensors generierten Empfangssignale bilden ein amplitudenmoduliertes Intensitätssignal, wobei die Amplitudenmodulation entsprechend dem Kontrastmuster des Barcodes ausgebildet ist. Bei einem kamerabasierten optischen Sensor ist als Empfänger ein Bildsensor vorgesehen, mit dem ebenfalls ein amplitudenmoduliertes Intensitätssignal des Barcodes erhalten wird.

In einer Auswerteeinheit des optischen Sensors erfolgt anhand des Intensitätssignals die Erfassung und Dekodierung des Barcodes. Bei bekannten optischen Sensoren sind digitale Filterstrukturen vorgesehen, die auch Differentiationseinheiten bilden. Mit diesen wird die erste und zweite Abteilung des Intensitätssignals gebildet. Die Kanten der Strichmuster des Barcodes ergeben sich aus den Nullstellen der zweiten Ableitung des Intensitätssignals. Um eine zuverlässige Kantendetektion zu gewährleisten, wird an den Nullstellen der zweiten Ableitung des Intensitätssignals auch die erste Ableitung des Intensitätssignals mitberücksichtigt.

Nachteilig hierbei ist, dass digitale Filterstrukturen, wie zum Beispiel FIR-Filter mit Differentialaufgaben beim Entwurf nur beschränkte beziehungsweise bestimmte Filterkomponenten zulassen, so dass die Komplexität der Filterstrukturen nicht frei skalierbar ist. Dies führt zu Einschränkungen der Filterfunktionen der digitalen Filterstrukturen und damit letztlich zu nicht zufriedenstellenden Ergebnissen bei der Detektion von Barcodes.

Die DE 101 37 093 A1 betrifft ein Verfahren zum Erkennen eines Codes, bei dem der Code innerhalb einer Bildumgebung lokalisiert und/oder identifiziert wird. Dieser Schritt wird mittels eines neuronalen Netzwerks durchgeführt.

Zur Durchführung des Verfahrens ist ein Codeleser in Form eines optoelektronischen Sensors vorgesehen.

In EP 3 428 834 A1 wird ein optoelektronischer Codeleser, insbesondere Barcodeleser, mit mindestens einem Lichtempfangselement zur Erzeugung von Bilddaten aus Empfangslicht und mit einer Auswertungseinheit angegeben, in der ein Klassifikator implementiert ist, der Codebereichen der Bilddaten eine Codeinformation zuordnet, wobei der Klassifikator für ein maschinelles Lernen ausgebildet ist und mittels überwachtem Lernen anhand von gelesenen Codes eines klassischen Decoders trainiert ist, der mit Verfahren ohne maschinelles Lernen arbeitet.

In der US 2019/0325183 A1 ist ein Codeleser mit einem Bildsensor beschrieben. Zur Auswertung von Bildsignalen werden neuronale Netze eingesetzt.

In P.S.K. ROHIT VARMA ET AL:"Edge Detection through Artificial Neural Networks", IOSR JOURNAL OF VLSI AND SIGNAL PROCESSING, Bd. 4, Nr. 2, 1. Januar 2014 (2014-01-01), Seiten 22-25, XP055727638, ISSN: 2319-4197, DOI: 10.9790/4200-04242225 ist eine Bildverarbeitungsmethode beschrieben, bei der in Bildern Kanten mittels neuronaler Netze erkannt werden.

In MOHAMED A. EL-SAYED ET AL:"Automated Edge Detection Using Convolutional Neural Network", INTERNATIONAL JOURNAL OF ADVANCED COMPUTER SCIENCE AND APPLICATIONS, Bd. 4, Nr. 10, 1. Januar 2013 (2013-01-01), Seiten 11-17, XP05506215, ist ein Bildverarbeitungsverfahren beschrieben, bei dem in Bildern Kanten mittels neuronaler Netze erfasst werden.

Der Erfindung liegt die Aufgabe zugrunde einen optischen Sensor und ein Verfahren bereitzustellen, mittels derer eine sichere und zuverlässige Detektion von Barcodes ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Codes, mit einem Lichtstrahlen emittierenden Sender und einem Lichtstrahlen empfangenden Empfänger, wobei der Sender und Empfänger zur Abtastung von Codes ausgebildet sind, und mit einer Auswerteeinheit, welche zur Ermittlung von Codeinformationen der Codes in Abhängigkeit von Empfangssignalen des Empfängers ausgebildet ist. Die Auswerteeinheit weist neuronale Netze auf, die Differentiationseinheiten zur Differentiation der Empfangssignale ausbilden.

Die Erfindung betrifft weiterhin ein entsprechendes Verfahren.

Durch die Verwendung neuronaler Netze für die Auswertung von Empfangssignalen des erfindungsgemäßen optischen Sensors wird überraschend eine signifikant verbesserte, insbesondere zuverlässige und fehlersichere Detektion von Codes ermöglicht.

Ein wesentlicher Aspekt der Erfindung ist, dass die neuronalen Netze eine große Anzahl von Koeffizienten aufweisen können, die eine beliebig skalierbare Komplexität der neuronalen Netze ermöglichen, wodurch mit dem optischen Sensor auch eine große Anzahl unterschiedlicher Codes sicher erfasst werden kann.

Zweckmäßig werden die Koeffizienten der neuronalen Netze in einem Training eingelernt, wobei das Training anhand von bekannten Codes erfolgt, die jeweils bekannte Verläufe von Empfangssignale liefern. Die Bestimmung der Koeffizienten ist umso besser und zuverlässiger, je mehr Codes eingelernt werden.

Überraschend hat sich gezeigt, dass durch ein solches Training rasch konvergierende Koeffizienten der neuronalen Netze erhalten werden, wodurch eine sichere Erfassung unterschiedlicher Codes ermöglicht wird.

Der optische Sensor kann zur Erfassung unterschiedlicher Codes eingesetzt werden. Besonders vorteilhaft können die Codes als Barcodes ausgebildet sein.

Auch der optische Sensor selbst kann in unterschiedlichen Ausführungsformen ausgebildet sein. Beispielsweise kann der optische Sensor als Scanner oder als Kamerasensor ausgebildet sein.

In jedem Fall wird mit dem optischen Sensor bei der Detektion eines Codes ein Empfangssignal erhalten, das die vollständige Information des zu detektierenden Codes, insbesondere Barcodes, enthält. Dabei wird als Empfangssignal ein amplitudenmoduliertes Intensitätssignal erhalten, wobei die Amplitudenmodulation des Intensitätssignals die Information des kompletten Kontrastmusters des Codes enthält.

Erfindungsgemäß bilden die neuronalen Netze Differentiationseinheiten zur Differentiation der Empfangssignale aus.

Insbesondere werden mit einem ersten neuronalen Netz einfach differenzierte Empfangssignale gebildet und mit einem zweiten neuronalen Netz zweifach differenzierte Empfangssignale gebildet.

Dann erfolgt mittels der differenzierten Empfangssignale eine Detektion von Kanten von Codes.

Die Nullstellen der zweifach differenzierten Empfangssignale, das heißt des amplitudenmodulierten Intensitätssignals definieren die Kanten des Codes, das heißt die Hell-Dunkel-Übergänge des Kontrastmusters des Codes. Flankierend hierzu können zusätzlich die einfach differenzierten Empfangssignale herangezogen werden, um die Kanten noch genauer zu bestimmen beziehungsweise zu selektieren.

Anhand der so bestimmten Kantenlagen erfolgt dann in einem Decoder die Dekodierung der gelesenen Codes, insbesondere Barcodes.

Gemäß einer besonders vorteilhaften Ausführungsform wird das Intensitätssignal allgemein als Tiefpasssignal beschrieben, welches dann zur Detektion des Codes differenziert wird. Für eine exakte Beschreibung als Tiefpasssignal ist die Kenntnis der spektralen Dichte des Intensitätssignals von Vorteil.

Vorteilhaft für das Training der neuronalen Netze ist es, wenn die Koeffizienten zur Beschreibung dieses Tiefpasssignals anhand der Detektion von bekannten Codes bestimmt werden.

Mit den so bestimmten neuronalen Netzen wird dann im Arbeitsbetrieb die Detektion der Codes durchgeführt.

Die Erfindung wird im Folgenden anhand der Zeichnungen erläutert. Es zeigen:

Figur 1:   Erstes Ausführungsbeispiel von Sensorkomponenten des erfindungsgemäßen optischen Sensors.

Figur 2:   Zweites Ausführungsbeispiel von Sensorkomponenten des erfindungsgemäßen optischen Sensors.

Figur 3:   Blockschaltbild des erfindungsgemäßen optischen Sensors.

Figur 4:   Verlauf von Ein- und Ausgangssignalen von neuronalen Netzen des optischen Sensors gemäß Figur 3.

Figur 5:   Ausschnitt der Signale gemäß Figur 4 in vergrößerter Darstellung.

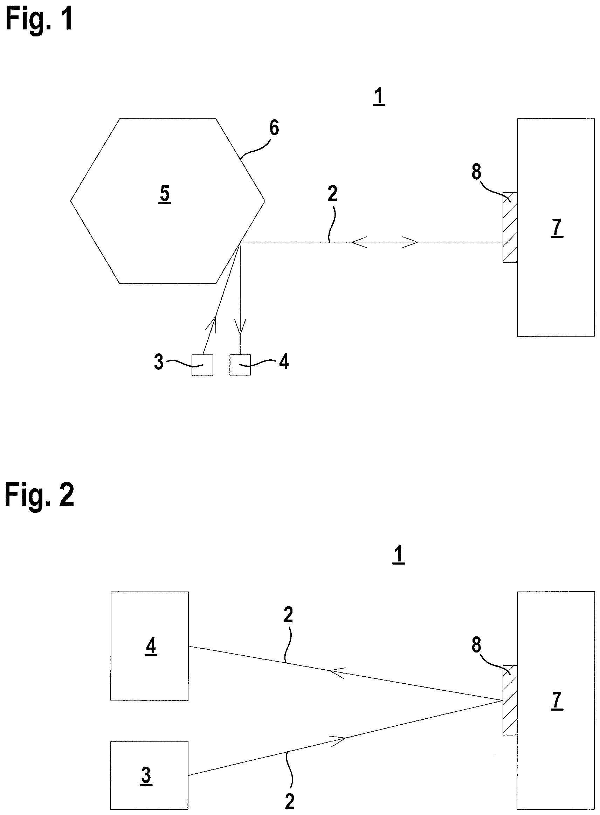

Figur 1 zeigt ein Ausführungsbeispiel der optischen Sensorkomponenten des erfindungsgemäßen optischen Sensors 1, welcher als Codeleser, und spezifisch als Barcodeleser ausgebildet ist.

Der optische Sensor 1 weist einen Lichtstrahlen 2 emittierenden Sender 3 und einen Lichtstrahlen 2 empfangenden Empfänger 4 auf. Der Sender 3 kann von einer Leuchtdiode oder Laserdiode gebildet sein, der Empfänger 4 kann von einer Photodiode gebildet sein. Die Lichtstrahlen 2 werden über eine Ablenkeinheit periodisch innerhalb eines Erfassungsbereichs abgelenkt. Im vorliegenden Fall besteht die Ablenkeinheit aus einem motorisch getriebenen Polygonspiegelrad 5. Das Polygonspiegelrad 5 ist um eine senkrecht zur Zeichenebene verlaufende Drehachse drehbar. Die Lichtstrahlen 2 werden an den Facetten 6 des Polygonspiegelrads 5 abgelenkt.

Dadurch werden die Lichtstrahlen 2 über einen auf einem Objekt 7 angeordneten Barcode 8 geführt, der in bekannter Weise aus einer Folge von hellen und dunklen Strichelementen besteht. Die bei der Detektion des Barcodes 8 erhaltenen Empfangssignale des Empfängers 4 bilden ein amplitudenmoduliertes Intensitätssignal, wobei in der Amplitudenmodulation des Intensitätssignals das Kontrastmuster des Barcodes 8 enthalten ist.

Figur 2 zeigt ein weiteres Beispiel der optischen Sensorkomponenten des als Barcodeleser ausgebildeten optischen Sensors 1. Im vorliegenden Fall ist als Empfänger 4 ein Bildsensor, beispielsweise ein CMOS- oder CCD-Array vorgesehen. Dem Bildsensor ist als Sender 3 eine Beleuchtungseinheit, beispielsweise eine Leuchtdiodenanordnung zugeordnet. Auch in diesem Fall wird ein Barcode 8 auf einem Objekt 7 detektiert, wie Figur 2 zeigt. Die Ausgangssignale der Empfangselemente des Empfängers 4 liefern wieder ein amplitudenmoduliertes Intensitätssignal, wobei in der Amplitudenmodulation das Kontrastmuster des Barcodes 8 kodiert ist.

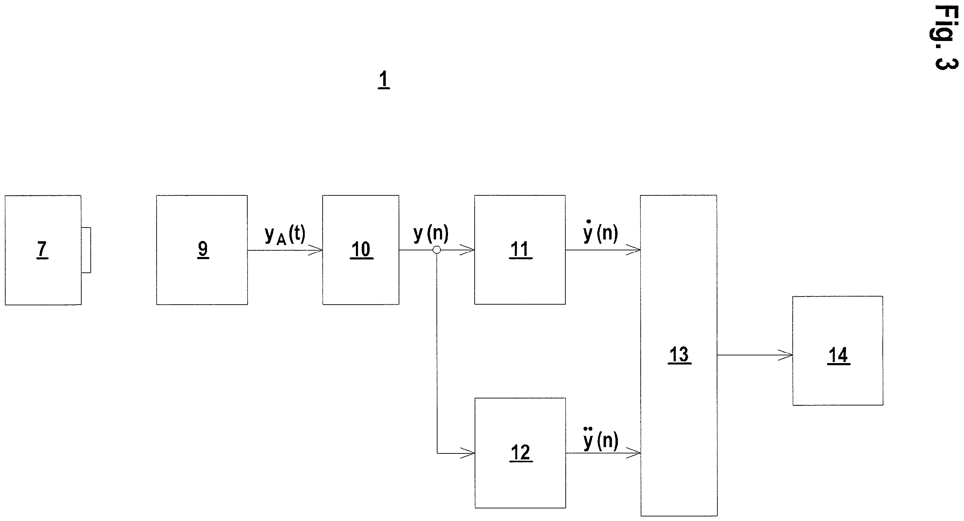

Figur 3 zeigt ein Blockschaltbild des optischen Sensors 1. In Figur 3 sind schematisch die optischen Sensorkomponenten zur Erfassung des Barcodes 8 auf dem Objekt 7, wie in den Figuren 1 und 2 dargestellt, als Scanner Frontend 9 dargestellt. Die dort generierten zeitabhängigen Empfangssignale $y_A(t)$ werden über einen Analog-Digital-Wandler 10 einer Auswerteinheit in Form einer Rechnereinheit zugeführt. Die Auswerteinheit umfasst als Komponenten ein erstes neuronales Netz 11, ein zweites neuronales Netz 12, ein Kantendetektionsmodul 13 und einen Decoder 14.

Das analoge zeitabhängige Empfangssignal $y_A(t)$ in Form des amplitudenmodulierten Intensitätssignals wird im Analog-Digital-Wandler 10 in ein digitalisiertes Empfangssignal $y(n)$ gewandelt.

Dieses digitalisierte Empfangssignal wird zur Differentiation den beiden neuronalen Netzen 11, 12 zugeführt. Im ersten neuronalen Netz 11 wird das digitalisierte Empfangssignal $y(n)$ einfach differenziert, das heißt es wird die erste Ableitung $\dot{y}(n)$ gebildet. Im zweiten neuronalen Netz 12 wird das digitalisierte Empfangssignal $y(n)$ zweifach differenziert, das heißt es wird die zweite Ableitung $\ddot{y}(n)$ gebildet.

Hierzu wird im vorliegenden Fall das Empfangssignal $y_A(t)$ wie folgt beschrieben:

$$y_A(t) = x_A(t) + n(t) \text{ mit}$$

$$x_A(t) = \sqrt{\frac{2}{N}} \cdot \sum_{k=1}^{N} \cos\left(2 \cdot \pi \cdot f_k \cdot t + \varphi_k\right).$$

Das Signal $x_A(t)$ ist ein Tiefpasssignal, das Signal $n(t)$ stellt ein additives Rauschsignal dar.

Das Tiefpasssignal $x_A(t)$ enthält Frequenzanteile mit Frequenzen $f_k$ (und Phasenwinkel $\varphi_k$), wobei die Frequenzanteile nach einer Wahrscheinlichkeitsdichtefunktion $p(f)$ verteilt sind, welche proportional zur spektralen Intensität des Signals ist. Im einfachsten Fall ist die Wahrscheinlichkeitsdichtefunktion $p(f)$ eine Gleichverteilung zwischen $-f_g$ und $+f_g$, wobei $f_g$ eine Grenzfrequenz ist. Damit wird ein ideales Tiefpasssignal mit einem rechteckförmigen Frequenzspektrum realisiert. Anstatt der Cosinus-Funktion können auch die Sinus-Funktion oder die e-(Exponential)Funktion verwendet werden, um das Tiefpasssignal zu beschreiben.

Für das als Tiefpasssignal beschriebene Intensitätssignal $y_A(t)$ ergeben sich für die erste und zweite Ableitung:

$$\dot{y}_A(t) = \dot{x}_A(t) + \dot{n}(t) \text{ mit}$$

$$\dot{x}_A(t) = -2 \cdot \pi \cdot K_1 \cdot \sqrt{\frac{2}{N}} \cdot \sum_{k=1}^{N} f_k \cdot \sin(2 \cdot \pi \cdot f_k \cdot t + \varphi_k),$$

$$\ddot{y}_A(t) = \ddot{x}_A(t) + \ddot{n}(t) \text{ mit}$$

$$\ddot{x}_A(t) = -4 \cdot \pi^2 \cdot K_2 \cdot \sqrt{\frac{2}{N}} \cdot \sum_{k=1}^{N} f_k^2 \cdot \cos(2 \cdot \pi \cdot f_k \cdot t + \varphi_k).$$

Dabei sind $K_1$ und $K_2$ Normierungskonstanten.

Für das digitalisierte Intensitätssignal $y(n)$ ergeben sich die entsprechenden folgenden Beziehungen:

$$y(n) = x(n) + n(n) \text{ mit}$$

$$x(n) = \sqrt{\frac{2}{N}} \cdot \sum_{k=1}^{N} \cos\left(2 \cdot \pi \cdot \Omega_k \cdot n + \varphi_k\right) + n(n),$$

$$\dot{y}(n) = \dot{x}(n) + \dot{n}(n) \text{ mit}$$

$$\dot{x}(n) = -2 \cdot \pi \cdot \widetilde{K}_1 \cdot \sqrt{\frac{2}{N}} \cdot \sum_{k=1}^{N} \Omega_k \cdot \sin(2 \cdot \pi \cdot \Omega_k \cdot n + \varphi_k),$$

$$\ddot{y}(n) = \ddot{x}(n) + \ddot{n}(n) \text{ mit}$$

$$\ddot{x}(n) = -4 \cdot \pi^2 \cdot \tilde{K}_2 \cdot \sqrt{\frac{2}{N}} \cdot \sum_{k=1}^{N} \Omega_k^2 \cdot \cos(2 \cdot \pi \cdot \Omega_k \cdot n + \varphi_k).$$

In diesen Gleichungen gilt $\Omega_k = f_k \cdot T_A$, wobei $T_A$ die Abtastperiode des Analog-Digital-Wandlers 10 ist. $\tilde{K}_1$, $\tilde{K}_2$ sind Normierungskonstanten.

Um das erste neuronale Netz 11 zu bestimmen, welches die erste Ableitung realisieren soll, werden die Signale y(n) als Eingangssignal und $\dot{x}(n)$ als gewünschtes Ausgangssignal dem Netz zum Training übergeben. Entsprechend werden die Signale y(n) als Eingangssignal und $\ddot{x}(n)$ als gewünschtes Ausgangssignal für die Bestimmung des zweiten neuronalen Netzes 12 verwendet.

Im Training werden bekannte Barcodes 8 mit dem optischen Sensor 1 detektiert, so dass die Eingangs- und Ausgangssignale bekannt sind, woraus die Koeffizienten für die Trainingssignale der neuronalen Netze 11, 12, nämlich die Werte $f_k$ beziehungsweise $\Omega_k$ und/oder zusätzlich die Wahrscheinlichkeitsdichtefunktion p(f) bestimmt werden können.

Nach dem Training der neuronalen Netze 11, 12 beginnt der Arbeitsbetrieb des optischen Sensors 1, wobei das bei der Abtastung eines Barcodes 8 erhaltene Intensitätssignal $y_A(t)$ im Analog-Digital-Wandler 10 digitalisiert wird, so dass dann in dem neuronalen Netz 11 die erste Ableitung $\dot{y}(n)$ und im zweiten neuronalen Netz 12 die zweite Ableitung $\ddot{y}(n)$ der digitalisierten Intensitätssignale gebildet wird.

Im Kantendetektionsmodul 13 werden aus den Signalen $\dot{y}(n)$, $\ddot{y}(n)$ die Kantenlagen und damit die Strichbreiten der Strichelemente des Barcodes 8 bestimmt. Die Nullstellen der zweiten Ableitung $\ddot{y}(n)$ definieren die Kantenlagen, wobei zu deren Bestimmung die erste Ableitung $\dot{y}(n)$ flankierend hinzugezogen wird.

Anhand der bestimmten Kantenlagen erfolgt im Decoder 14 die Dekodierung des Barcodes 8.

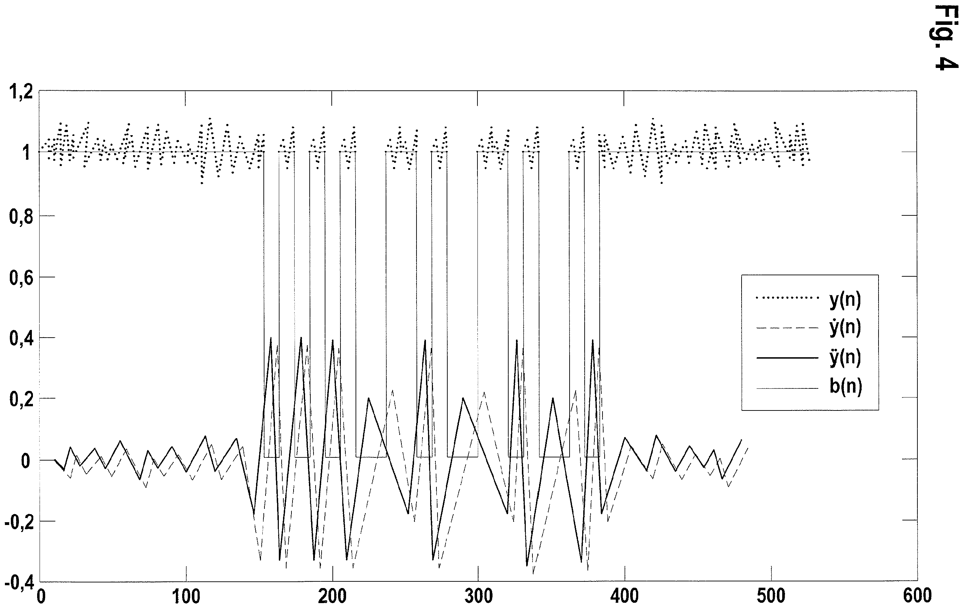

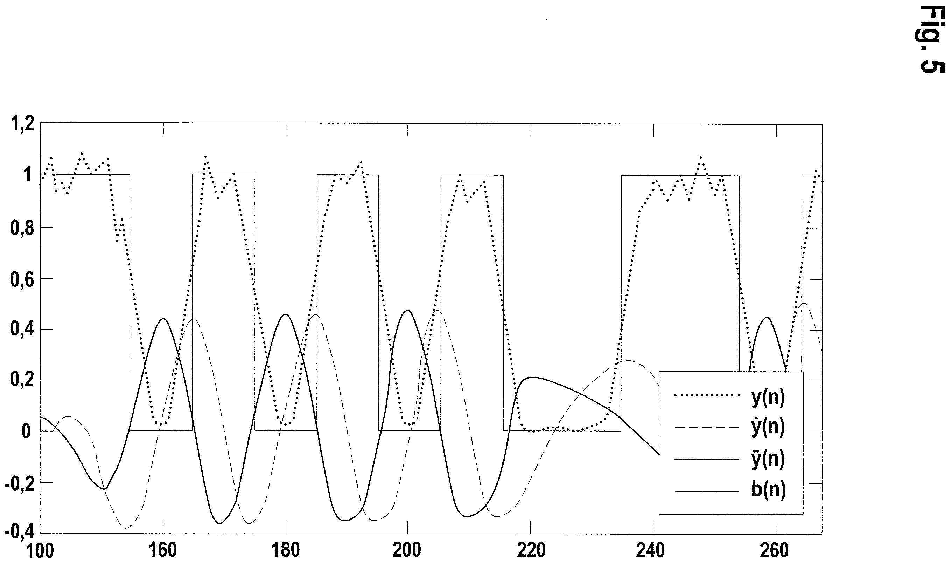

Die Figuren 4 und 5 zeigen typische Verläufe des digitalisierten Intensitätssignals y(n) und deren Ableitungen $\dot{y}(n)$ und $\ddot{y}(n)$. Weiterhin ist das Barcodesignal b(n) dargestellt, das aus den vorgenannten Signalen gewonnen wird.

Bezugszeichenliste

| | |
|---|---|
| (1) | Optischer Sensor |
| (2) | Lichtstrahl |
| (3) | Sender |
| (4) | Empfänger |
| (5) | Polygonspiegelrad |
| (6) | Facette |
| (7) | Objekt |
| (8) | Barcode |
| (9) | Scanner Frontend |
| (10) | Analog-Digital-Wandler |
| (11) | Neuronales Netz, erstes |
| (12) | Neuronales Netz, zweites |
| (13) | Kantendetektionsmodul |
| (14) | Decoder |

**Patentansprüche**

1. Optischer Sensor (1) zur Erfassung von Codes, mit einem Lichtstrahlen (2) emittierenden Sender (3) und einem Lichtstrahlen (2) empfangenden Empfänger (4), wobei der Sender (3) und der Empfänger ( 4) zur Abtastung von Codes ausgebildet sind, und mit einer Auswerteeinheit, welche zur Ermittlung von Codeinformationen der Codes in Abhängigkeit von Empfangssignalen des Empfängers (4) ausgebildet ist wobei die Auswerteeinheit neuronale Netze (11, 12) aufweist, **dadurch gekennzeichnet, dass** die neuronalen Netze (11, 12) Differentiationseinheiten zur Differentiation der Empfangssignale ausbilden.

2. Optischer Sensor (1) nach Anspruch 1, **dadurch gekennzeichnet, dass** dieser zur Erfassung von Barcodes (8) ausgebildet ist.

**3.** Optischer Sensor (1) nach einem der Ansprüche 1 oder 2, **dadurch gekennzeichnet, dass** dieser als Scanner oder als Kamerasensor ausgebildet ist.

**4.** Optischer Sensor (1) nach einem der Ansprüche 1 bis 3, **dadurch gekennzeichnet, dass** mit einem ersten neuronalen Netz (11) einfach differenzierte Empfangssignale gebildet werden und mit einem zweiten neuronalen Netz (12) zweifach differenzierte Empfangssignale gebildet werden.

**5.** Optischer Sensor (1) nach Anspruch 4, **dadurch gekennzeichnet, dass** mittels der differenzierten Empfangssignale eine Detektion von Kanten von Codes erfolgt.

**6.** Optischer Sensor (1) nach Anspruch 5, **dadurch gekennzeichnet, dass** den neuronalen Netzen (11, 12) ein Decoder (14) nachgeordnet ist.

**7.** Optischer Sensor (1) nach einem der Ansprüche 1 bis 6, **dadurch gekennzeichnet, dass** die Empfangssignale ein Intensitätssignal bilden, das eine durch Kontrastunterschiede eines detektierten Codes bedingte Amplitudenmodulation aufweist, und dass das Intensitätssignal als Tiefpasssignal beschrieben wird, welches zur Detektion des Codes differenziert wird.

**8.** Optischer Sensor (1) nach Anspruch 7, **dadurch gekennzeichnet, dass** während eines Trainings der neuronalen Netze (11, 12) Koeffizienten zur Beschreibung der Tiefpasssignale bestimmt werden.

**9.** Optischer Sensor (1) nach Anspruch 8, **dadurch gekennzeichnet, dass** für das Training mehrere bekannte Codes detektiert werden.

**10.** Optischer Sensor (1) nach Anspruch 9, **dadurch gekennzeichnet, dass** anhand bekannter Empfangssignale und differenzierter Empfangssignale der bekannten Codes die Koeffizienten der Tiefpasssignale bestimmt werden.

**11.** Optischer Sensor (1) nach einem der Ansprüche 1 bis 10, **dadurch gekennzeichnet, dass** mit den neuronalen Netzen (11, 12) eine digitale Filterstruktur gebildet wird.

**12.** Verfahren zur Erfassung von Codes mittels eines optischen Sensors (1), mit einem Lichtstrahlen (2) emittierenden Sender (3) und einem Lichtstrahlen (2) empfangenden Empfänger (4), wobei der Sender (3) und der Empfänger (4) zur Abtastung von Codes ausgebildet sind, und mit einer Auswerteeinheit, welche zur Ermittlung von Codeinformationen der Codes in Abhängigkeit von Empfangssignalen des Empfängers (4) ausgebildet ist, wobei die Auswerteeinheit neuronale Netze (11, 12) aufweist, **dadurch gekennzeichnet, dass** die neuronalen Netze (11, 12) Differentiationseinheiten zur Differentiation der Empfangssignale ausbilden.

**Claims**

**1.** An optical sensor (1) for detecting codes, having a transmitter (3) emitting light beams (2) and a receiver (4) receiving light beams (2), the transmitter (3) and the receiver (4) being designed to scan codes, and having an evaluation unit which is designed to determine code information of the codes as a function of received signals of the receiver (4), the evaluation unit having neural networks (11, 12), **characterised in that** the neural networks (11, 12) form differentiation units for differentiating the received signals.

**2.** An optical sensor (1) according to claim 1, **characterised in that** it is designed to detect barcodes (8).

**3.** An optical sensor (1) according to one of claims 1 or 2, **characterised in that** it is designed as a scanner or as a camera sensor.

**4.** An optical sensor (1) according to one of claims 1 to 3, **characterised in that** a first neural network (11) is used to form single-differentiated received signals and a second neural network (12) is used to form double-differentiated received signals.

**5.** An optical sensor (1) according to claim 4, **characterised in that** edges of codes are detected by means of the differentiated received signals.

**6.** An optical sensor (1) according to claim 5, **characterised in that** a decoder (14) is arranged downstream of the neural networks (11, 12).

**7.** An optical sensor (1) according to one of claims 1 to 6, **characterised in that** the received signals form an intensity signal which has an amplitude modulation caused by contrast differences of a detected code, and **in that** the intensity signal is described as a low-pass signal which is differentiated to detect the code.

**8.** An optical sensor (1) according to claim 7, **characterised in that** coefficients for describing the low-pass signals are determined during training of the neural networks (11, 12).

**9.** An optical sensor (1) according to claim 8, **characterised in that** several known codes are detected for the training.

**10.** An optical sensor (1) according to claim 9, **characterised in that** the coefficients of the low-pass signals are determined on the basis of known received signals and differentiated received signals of the known codes.

**11.** An optical sensor (1) according to one of claims 1 to 10, **characterised in that** a digital filter structure is formed with the neural networks (11, 12).

**12.** A method for detecting codes by means of an optical sensor (1), with a transmitter (3) emitting light beams (2) and a receiver (4) receiving light beams (2), wherein the transmitter (3) and the receiver (4) are designed to scan codes, and with an evaluation unit, which is designed to determine code information of the codes as a function of received signals of the receiver (4), the evaluation unit having neural networks (11, 12), **characterised in that** the neural networks (11, 12) form differentiation units for differentiating the received signals.

**Revendications**

**1.** Capteur optique (1) pour détecter des codes, comportant un émetteur (3) émettant des faisceaux lumineux (2) et un récepteur (4) recevant des faisceaux lumineux (2), l'émetteur (3) et le récepteur (4) étant conçus pour scanner des codes, et comportant une unité d'évaluation qui est conçue pour déterminer les informations des codes en fonction des signaux reçus du récepteur (4), l'unité d'évaluation comportant des réseaux neuronaux (11, 12), **caractérisé en ce que** les réseaux neuronaux (11, 12) constituent des unités de différenciation pour différencier les signaux reçus.

**2.** Capteur optique (1) selon la revendication 1, **caractérisé en ce qu'**il est conçu pour détecter des codes-barres (8).

**3.** Capteur optique (1) selon l'une des revendications 1 ou 2, **caractérisé en ce qu'**il est conçu comme un scanner ou comme un capteur de caméra.

**4.** Capteur optique (1) selon l'une des revendications 1 à 3, **caractérisé en ce qu'**un premier réseau neuronal (11) est utilisé pour former des signaux reçus à simple différenciation et un second réseau neuronal (12) est utilisé pour former des signaux reçus à double différenciation.

**5.** Capteur optique (1) selon la revendication 4, **caractérisé en ce que** les bords des codes sont détectés au moyen des signaux reçus différenciés.

**6.** Capteur optique (1) selon la revendication 5, **caractérisé en ce qu'**un décodeur (14) est disposé en aval des réseaux neuronaux (11, 12).

**7.** Capteur optique (1) selon l'une des revendications 1 à 6, **caractérisé en ce que** les signaux reçus forment un signal d'intensité qui présente une modulation d'amplitude causée par les différences de contraste d'un code détecté, et **en ce que** le signal d'intensité est décrit comme un signal passe-bas qui est différencié pour détecter le code.

**8.** Capteur optique (1) selon la revendication 7, **caractérisé en ce que** les coefficients pour décrire les signaux passe-bas sont déterminés pendant l'entraînement des réseaux neuronaux (11, 12).

**9.** Capteur optique (1) selon la revendication 8, **caractérisé en ce que** plusieurs codes connus sont détectés pour l'entraînement.

10. Capteur optique (1) selon la revendication 9, **caractérisé en ce que** les coefficients des signaux passe-bas sont déterminés sur la base de signaux reçus connus et de signaux reçus différenciés des codes connus.

11. Capteur optique (1) selon l'une des revendications 1 à 10, **caractérisé en ce qu'**une structure de filtre numérique est constituée avec les réseaux neuronaux (11, 12).

12. Procédé de détection de codes au moyen d'un capteur optique (1), avec un émetteur (3) émettant des faisceaux lumineux (2) et un récepteur (4) recevant des faisceaux lumineux (2), l'émetteur (3) et le récepteur (4) étant conçus pour balayer des codes, et avec une unité d'évaluation, conçue pour déterminer les informations des codes en fonction des signaux reçus du récepteur (4), l'unité d'évaluation comportant des réseaux neuronaux (11, 12), **caractérisés en ce que** les réseaux neuronaux (11, 12) forment des unités de différenciation pour différencier les signaux reçus.

Fig. 1

Fig. 2

**Fig. 3**

Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137093 A1
- EP 3428834 A1

- US 20190325183 A1

**In der Beschreibung aufgeführte Nicht-Patentliteratur**

- **P.S.K. ROHIT VARMA et al.** Edge Detection through Artificial Neural Networks. *IOSR JOURNAL OF VLSI AND SIGNAL PROCESSING,* 01. Januar 2014, vol. 4 (2), ISSN 2319-4197, 22-25

- **MOHAMED A. EL-SAYED et al.** Automated Edge Detection Using Convolutional Neural Network. *INTERNATIONAL JOURNAL OF ADVANCED COMPUTER SCIENCE AND APPLICATIONS,* 01. Januar 2013, vol. 4 (10), 11-17